# EUROPÄISCHE PATENTSCHRIFT

(11) **EP 2 927 031 B1**
(45) Veröffentlichungstag und Bekanntmachung des Hinweises auf die Patenterteilung: **06.06.2018**
(21) Anmeldenummer: 14198586.1
(22) Anmeldetag: 17.12.2014
(51) Int. Cl.: B60H 1/00, B60H 3/06

(54) **Fahrerkabine einer land- oder bauwirtschaftlich nutzbaren Arbeitsmaschine**
Driver cabin of a working machine usable in agriculture or civil engineering
Cabine de conducteur d'une machine-outil à usage agricole ou dans les travaux publics

(30) Priorität: 31.03.2014 DE 102014104495
(43) Veröffentlichungstag der Anmeldung: 07.10.2015
(73) Patentinhaber: CLAAS Selbstfahrende Erntemaschinen GmbH, 33428 Harsewinkel (DE)
(72) Erfinder: Vennemann, Hendrik, 59399 Olften (DE)

(56) Entgegenhaltungen:
- EP-A1- 0 125 620
- US-A- 3 657 992
- US-A- 4 088 364

## Beschreibung

Die Erfindung betrifft gemäß dem Oberbegriff des Patentanspruches 1 eine Fahrerkabine einer land- oder bauwirtschaftlich nutzbaren Arbeitsmaschine mit mehreren ein Kabinendach tragenden im Wesentlichen vertikal verlaufenden Rahmenteilen und mit einer Einrichtung zur Förderung von Frischluft in ein Kabineninneres der Fahrerkabine, wobei der Einrichtung in Strömungsrichtung der Frischluft zumindest ein Luftfilter zur Entfernung von groben und feinen Schmutzpartikeln aus der Frischluft vorgeschaltet ist, der zumindest ein Feinfilterelement aufweist.

Land- oder bauwirtschaftlich nutzbare Arbeitsmaschinen werden im Allgemeinen mit Fahrerkabinen ausgerüstet, welche eine die Arbeitsmaschine bedienende Person vor Wettereinflüssen, Lärmemission, Schwingungen der Arbeitsmaschine, hohen Außentemperaturen, Sonneneinstrahlung und Staub schützt. Entsprechende Fahrerkabinen sollen eine gute Rundumsicht, unter anderem auch auf an die Arbeitsmaschine angekuppelten Arbeitsgeräte, die zumeist in einer unterhalb der Ebene der Fahrerkabine liegenden Ebene betrieben werden, zulassen. Beispielsweise sind entsprechende zumindest im Frontbereich und an ihren Seiten vollverglaste Fahrerkabinen bei Erntemaschinen, wie zum Beispiel selbstfahrenden Mähdreschern oder selbstfahrenden Feldhäckslern derart oberhalb und hinter einem Erntevorsatz angeordnet, dass die Person eine ungehinderte Sicht auf den zumeist mit relativ großer Arbeitsbreite ausgebildeten Erntevorsatz hat. Bei landwirtschaftlichen Traktoren oder Systemfahrzeugen ist insbesondere eine gute Sicht auf die im Front- und/oder Heckbereich betriebenen Arbeitsgeräte erforderlich. Zum Schutz des Fahrers vor Staub und sonstigen Verunreinigungen, die anderenfalls zusammen mit der Frischluft in das Kabineninnere gelangen würden, ist in der Regel ein Luftfilter vorgesehen. Von diesem Luftfilter aus wird die Frischluft zumeist einem Wärmetauscher einer Klimaanlage und daran anschließend einem Luftverteilungssystem zugeführt.

Bei Mähdreschern ist je nach Art und Zustand des Erntegutes mit einem sehr hohen Staubaufkommen zu rechnen, das üblicherweise im Bereich von 200 bis 500 mg pro m³ angesaugter Frischluft liegt. Dabei handelt es sich zum einen um große Partikel, wie zum Beispiel Spreu, Kurzstrohteile, Bestandteile von Blättern usw. und zum anderen um einen sehr hohen Anteil organischen Staubes, der die Lunge des Fahrers schädigen kann. Außerdem besteht ein erhebliches Risiko, dass der Getreidepollen enthaltende Staub beim Fahrer Allergien auslöst.

Bei selbstfahrenden Feldhäckslern ist zwar der Anteil organischen Staubes geringer, dafür sind aber in der Umgebungsluft der Fahrerkabine hohe Anteile von größeren Partikeln mit einer Größe von > 10 µm zu verzeichnen. Die die Fahrerkabine umgebende Frischluft ist bei landwirtschaftlichen Traktoren oder Systemfahrzeugen im Betrieb mit Bodenbearbeitungsgeräten sehr stark mit mineralischem Bodenstaub, vorzugsweise Quarz, belastet. Es handelt sich dabei um Partikel mit einer Größe > 2 µm. Außerdem können derartige Arbeitsmaschinen auch mit Arbeitsgeräten betrieben werden, über die Dünge- oder Spritzmittel ausgebracht werden. Diese können in Form von Aerosolen, Gasen oder Partikeln, also in feinkörniger Form, vorliegen.

Aus alledem ergibt sich, dass insbesondere bei Mähdreschern aufgrund des hohen Aufkommens großer Partikel und organischen Staubes mittels eines entsprechenden Luftfilters eine gute Massenabscheidung gewährleistet sein muss. Aus der starken Verschmutzung der Frischluft resultiert allerdings auch, dass mit den in entsprechenden Luftfiltern verwendeten Einsätzen nur sehr kurze Standzeiten erzielt werden können und die Luftfilter folglich in sehr kurzen Intervallen gereinigt und eventuell ausgetauscht werden müssen. Je nach Anordnung des Filters lagern sich Ansammlungen von Staub und größeren Partikel auch in den den entsprechenden Filter umgebenden Bauteilen ab.

Die anfallende Staubmenge richtet sich unter anderem auch nach dem Zustand des Erntegutes und den während der Ernte herrschenden Wetterverhältnissen. So können durchaus kurze Intervalle von einem Tag für den Wechsel des Filterelements und die Reinigung der den Luftfilter umgebenden Bauteile erforderlich sein. Bei landwirtschaftlichen Traktoren oder Systemfahrzeugen ist zwar je nach durchgeführter Arbeit nur ein geringer Anteil an großen Partikeln in der Frischluft zu verzeichnen. Die feinen Partikel mit einer Größe von mehr als 2 µm setzen aber auch den Filtereinsatz innerhalb kurzer Betriebszeit zu und lagern sich in den den Luftfilter aufnehmenden Gehäuseteilen ab.

Letztendlich ist in allen Fällen zu gewährleisten, dass im Kabineninneren stets in ausreichender Menge Frischluft zur Verfügung steht, da anderenfalls ein Sauerstoffmangel zur Ermüdung des Fahrers führen würde.

In der Regel werden entsprechende Luftfilter im Kabinendach im Bereich der dort ebenfalls untergebrachten Klimaanlage angeordnet. Wenn in einem solchen Fall ein Austausch des entsprechenden Luftfiltereinsatzes und eine Entfernung von Staub und Grobpartikeln von den diesen Luftfiltereinsatz umgebenden Flächen vorgenommen werden soll, müssen zumeist größere Teile des Kabinendaches entfernt werden, so dass damit ein erheblicher Arbeitsaufwand verbunden ist. Im Übrigen benötigt die diese Wartungsarbeiten durchführende Person Mittel, um diese Wartungsarbeiten in Höhe des Kabinendaches durchführen zu können. Sie muss dabei zum Teil auf die Arbeitsmaschine klettern und setzt sich einem erheblichen Unfallrisiko aus.

Eine Fahrerkabine einer land- oder bauwirtschaftlich nutzbaren Arbeitsmaschine der im Oberbegriff des Patentanspruchs 1 angegebenen Gattung ist aus der US 4,072,487 A bekannt. Danach ist ein Traktor mit einer Kabine versehen, die an ihrer Heckseite einen relativ großen, mit einer schräg verlaufenden Traufe versehenen Dachüberstand aufweist. Im Inneren dieses über die Rückwand der Fahrerkabine vorragenden Teils des Kabinendaches ist ein Aufnahmeraum zur Anordnung von zwei Luftfiltereinheiten ausgebildet. Zwischen den beiden Luftfiltereinheiten, die radial verlaufende Lamellen aufweisen, ist ein Sauggebläse angebracht. Das Sauggebläse saugt die für das Kabineninnere vorgesehene Frischluft durch die beiden Filtereinheiten an und fördert sie anschließend über den Aufnahmeraum in hohle Rahmenteile der Fahrerkabine, von wo aus die Frischluft einem einer Heizung zugeordneten weiteren Gebläse zugeführt wird. Dabei ist vorgesehen, dass sich die auf der Mantelfläche der beiden Filtereinheiten anhaftenden Schmutzpartikel während des Betriebs des Traktors aufgrund von Vibrationen lösen und aufgrund der Schwerkraft aus dem Aufnahmeraum fallen.

Weiterhin ist aus der DE 600 27 063 T2 ein Luftfilter, der, wie dem Dokument entnommen werden kann, für einen Ansaugtrakt einer Brennkraftmaschine vorgesehen sein kann, bekannt. Dieser besteht im Wesentlichen aus einem Filtergehäuse mit einem darin angeordneten Filterelement. Der Luftfilter soll dabei in einer liegenden Position seines zylindrischen Außengehäuses, welches an einem Ende mittels eines Deckels verschlossen ist, betrieben werden. Dabei weist das Außengehäuse einen radialen Einlass auf, der auf eine innerhalb des Außengehäuses angeordnete Sperr- oder Ablenkfläche gerichtet ist. Diese Sperr- oder Ablenkfläche soll ein direktes Auftreffen der angesaugten Frischluft auf das Filterelement verhindern und diese gegebenenfalls spiral- oder ringförmig lenken. Die gefilterte Frischluft tritt aus dem Inneren des Filterelements über einen konzentrisch zum zylindrischen Außengehäuse verlaufenden Auslassstutzen aus und kann von dort aus über eine Ansaugleitung einem Ansaugstutzen der Brennkraftmaschine zugeführt werden.

Die Druckschrift EP 0 125 620 A1 offenbart ein Luftfiltersystem mit einem Vorreiniger, der selbstreinigend ausgebildet ist. Dafür teilt der Vorreiniger den Luftstrom in einen vorgereinigten und einen Schmutzpartikel enthaltenden Luftstrom auf. Der die Schmutzpartikel enthaltende Luftstrom wird durch einen Auslass geführt. Der vorgereinigte Luftstrom hingegen trifft auf einen Filter aus Papier.

Die Druckschrift US 4,088,364 offenbart eine Lüftereinheit, die in einem Kabinendach angeordnet ist. Die Lüftereinheit umfasst einen Vorfilteranordnung, beispielsweise eine Fiberglasmatte oder -Kissen, eine Schlauchfilteranordnung und eine Aktivkohlefilteranordnung, sowie einen Lüfter. Luft wird mit dem Lüfter über die Vorfilteranordnung durch die Schlauchfilteranordnung und die Aktivkohlefilteranordnung in die Fahrerkabine geleitet.

Die Druckschrift US 3,657,992 offenbart eine Fahrerkabine mit einem Frischluft Leitsystem, bei dem Frischluft durch einen Ansaugkanal und durch Eckpfeiler des Rahmens der Fahrerkabine geleitet wird.

Es ist Aufgabe der vorliegenden Erfindung, einen für eine Fahrerkabine einer land- oder bauwirtschaftlich nutzbaren Arbeitsmaschine vorgesehen Luftfilter derart auszubilden und an dieser anzuordnen, dass zum einen durch eine Abscheidung von großen Schmutzpartikeln vor dem Auftreffen der Frischluft auf ein Feinfilterelement eine Verlängerung der Standzeit des Luftfilters auch bei extremer Belastung der Frischluft mit Staub und großen Partikeln erzielt wird. Zum anderen sollen die Wartungsintervalle für eine manuelle Reinigung des Luftfilters oder eines Austausches des Feinfilterelements verlängert und vereinfacht werden.

Diese Aufgabe wird, ausgehend vom Oberbegriff des Patentanspruchs 1, durch dessen kennzeichnende Merkmale gelöst. Danach ist der Luftfilter als ein Schlauchfilter ausgeführt ist, der zumindest benachbart zu der Fahrerkabine angeordnet ist und sich im Wesentlichen parallel zu einem der Rahmenteile erstreckt. Hierzu kann der Schlauchfilter in einem Rahmenteil der Fahrerkabine angeordnet sein. Alternativ kann der Schlauchfilter an einer Rückwand der Fahrerkabine angeordnet sein. Der als vorzugsweise hängender Schlauchfilter ausgeführte Luftfilter hat den Vorteil, dass die im oberen Bereich angesaugte Luft die entlang des Schlauchfilters nach unten geführt wird, wobei die Filtration der Luft durch den Schlauchfilter in radialer Richtung, das heißt von außen nach innen erfolgt.

Der Luftfilter besteht aus einem Außengehäuse mit zumindest einem darin angeordneten Feinfilterelement. Außerdem weist der Luftfilter an seinem oberen Ende als integralen Bestandteil ein Gebläse auf, das Frischluft durch den Luftfilter saugt. Ferner ist im Inneren des Außengehäuses ein Abscheideelement angeordnet, das gegenüber dem Außengehäuse einen Führungskanal bildet. Eine Wand des Abscheideelements ist dabei derart im Außengehäuse angeordnet, dass sie das Feinfilterelement zumindest teilweise mit einem radialen Abstand umschließt.

Eine bevorzugte Weiterbildung der Erfindung ist in Unteranspruch 2 dargelegt. Danach weist der Luftfilter ein Außengehäuse mit einer zylindrisch ausgebildeten Außenkontur auf, dessen Längserstreckung in seiner Einbaulage im Wesentlichen vertikal verläuft. Vorzugsweise weist das Außengehäuse dabei insgesamt einen rechteckigen Querschnitt auf. Eine Länge des Außengehäuses kann dabei mindestens das Achtfache von dessen Breite betragen, so dass sich ein langgestreckter Luftfilter ergibt, der aufgrund seiner Abmessungen einen sehr geringen Bauraum beansprucht und sich dafür eignet, an relativ schmal bauenden Elementen der Fahrerkabine oder deren Anschlusskonstruktion angeordnet zu werden. Das Außengehäuse kann auch zylindrisch ausgebildet sein, wobei es dann über Halteelemente oder Flanschteile an der Umgebungskonstruktion fixiert sein soll.

Weiterhin ist erfindungsgemäß vorgesehen, dass horizontal verlaufende Lufteintrittsöffnungen im Außenmantel des Außengehäuses, einem oberen Ende benachbart, vorgesehen sind und dass von einem das Außengehäuse an seinem oberen Ende verschließenden Kopfstück ein ebenfalls zylindrisch ausgebildetes Abscheideelement ausgeht, welches gemeinsam mit dem Außengehäuse einen oder mehrere von den Lufteintrittsöffnungen ausgehende vertikal verlaufende Führungskanäle begrenzt. Die in den Luftfilter angesaugte ungereinigte Frischluft tritt demnach zunächst radial über die in Seitenwänden des Außengehäuses angeordneten Lufteintrittsöffnungen in dessen Inneres ein. Dort wird sie von dem zumindest einen längs des Außengehäuses und des Abscheideelements verlaufenden Führungskanal vertikal bis in den unteren Bereich des Luftfilters geführt. Im Falle einer zylindrischen Ausbildung des Außengehäuses und der Verwendung eines ebenfalls zylindrischen Abscheideelements können die Führungskanäle in dem Abscheideelement durch an dessen Außenmantel eingeformte längsverlaufende Sicken hergestellt sein.

Wie weiterhin erfindungsgemäß vorgesehen, sollen im Bereich eines unteren Endes des Abscheideelements horizontal verlaufende Durchlässe zur Umlenkung der Frischluft radial nach innen, also in das Innere des Abscheideelements vorgesehen sein, und es soll innerhalb des Abscheideelements mit radialem Abstand zu diesem das radial durchströmte Feinfilterelement angeordnet sein. Durch die zuvor erläuterte mehrfache Umlenkung der angesaugten Frischluft tritt ein Abscheideeffekt ein, das heißt, größere Schmutzbestandteile, wie zum Beispiel Spreu, Kurzstroh usw. werden aus der Frischluft abgeschieden und gelangen dabei in den unteren Bereich des Außengehäuses, wohingegen die von diesen Bestandteilen befreite Luft aufsteigt und dabei gleichzeitig das Feinfilterelement radial durchströmt.

Zum Sammeln der Schmutzbestandteile und des Staubes soll das Außengehäuse an seinem unteren, unterhalb der Durchlässe des Abscheideelements liegenden Ende ein entleerbares Reservoir aufweisen, welches an seinem Boden mit einem Verschlusselement versehen ist. Dieses Verschlusselement kann zur Entleerung des Reservoirs geöffnet werden. Die während der Strömung durch die Führungskanäle und der Umlenkung an den Durchlässen aus der Frischluft abgeschiedenen groben Schmutzpartikel sammeln sich folglich in diesem Reservoir.

Weiterhin ist bei einer alternativen Lösung nach dem abhängigen Patentanspruch 3 vorgesehen, dass das Außengehäuse eine prismenartig ausgebildete Außenkontur aufweist, dass die Wandabschnitte aber nicht in Umfangsrichtung umlaufen. Stattdessen wird eine Seitenwand des Außengehäuses durch ein Rahmenteil der Fahrerkabine oder eine Anschlusskonstruktion der Rahmenteile, wie beispielsweise ein Blech- oder Kunststoffteil einer Kabinenrückwand gebildet. Im Übrigen stimmt diese erfindungsgemäße Lösung mit der vorstehend zum Patentanspruch 1 erläuterten überein, so dass mit dieser schmalbauenden Anordnung ebenfalls eine hervorragende Abscheidung von groben Schmutzpartikeln in ein am unteren Ende des Außengehäuses liegendes Reservoir ermöglicht wird.

Demgegenüber sind nach der US 4,072,487 A zwei horizontal liegende, gleichachsig angeordnete Filterelemente vorgesehen, auf die die mit groben und feinen Schmutzbestandteilen durchsetzte Frischluft unmittelbar auftrifft. Es kann zwar, wie in der Druckschrift erläutert, mit sehr begrenzter Wirkung eine Reinigung der beiden Filterpatronen aufgrund der von der Fahrerkabine übertragenen Vibrationen erfolgen; diese Reinigung kann aber nur den vertikal nach unten gerichteten Abschnitt der mit Längslamellen versehenen Filterelemente betreffen. Im oberen Teil werden sich in erheblichem Maße grobe und staubförmige Ablagerungen bilden, die aufgrund der auftretenden Vibrationen nicht gelöst und entfernt werden kann. Im Übrigen ist keine Abscheidung der groben Schmutzbestandteile durch eine Umlenkung der Frischluft vorgesehen. Aussichtslos dürfte es auch sein, bei modernen, schwingungsgedämpften Fahrerkabinen durch eine entsprechende Anordnung der Filterelemente einen Reinigungseffekt der Filterelemente durch Vibrationen zu erwarten.

Bei der weiterhin zitierten Druckschrift DE 600 27 063 T2 ist zwar ein Luftfilter mit einem Außengehäuse vorgesehen; dieses Außengehäuse des für einen Ansaugtrakt einer Brennkraftmaschine vorgesehenen Luftfilters ist aber horizontal angeordnet, wobei das Außengehäuse einen mittigen radialen Einlass aufweist. Eine mit radialem Abstand sowohl zu einer Filterpatrone als auch zum Außengehäuse verlaufende Wand soll in diesem Fall als Sperr- oder Ablenkfläche dienen, um ein direktes Auftreffen der Frischluft auf das Filterelement zu verhindern und/oder um die Strömung beispielsweise spiral- oder ringförmig zu lenken. Da kein entsprechend der vorliegenden Erfindung ausgebildetes Abscheideelement vorgesehen ist, kann mit dieser Anordnung der erfindungsgemäße Abscheideeffekt auch nicht erzielt werden.

In weiterer Ausgestaltung der Erfindung ist vorgesehen, dass eine Einstiegstür der Kabine im geschlossenen Zustand an einem vertikalen Rahmenteil angeschlagen ist, welches den Luftfilter unmittelbar oder mittelbar aufnimmt. Die Einstiegstür, die über ein Scharnier an einem anderen Rahmenteil angelenkt ist, schlägt bei Erreichen ihres Schließzustandes an das vorgenannte vertikale Rahmenteil an und sorgt für eine Erschütterung, die auf den Luftfilter übertragen wird. Dabei kann der Luftfilter unmittelbar am Rahmenteil befestigt sein oder beispielsweise an einem Anschlussteil des Rahmenteils. Die entsprechende Erschütterung sorgt dafür, dass sich feine Schmutzpartikel, aus dem Inneren des Außengehäuses, dem Inneren des Abscheideelements und von dem Feinfilterelement lösen und somit in das Reservoir fallen. Folglich kann auf diese Weise in einem gewissen Umfang eine Reinigung des Luftfilters erfolgen, so dass sich die Wartungsintervalle trotz eines hohen Staubanteils in der Frischluft deutlich verlängern lassen. Zudem entsteht beim Zuziehen der Einstiegstür eine Druckwelle in der Kabine, welche sich über den Luftfilter abbauen kann. Dieser auf den Luftfilter einwirkende Druckimpuls trägt gleichfalls zur Reinigung des Luftfilters bei.

Weiterhin soll bei einer weiteren Ausgestaltung eines gemäß dem Patentanspruch 2 ausgebildeten Luftfilters das Außengehäuse einen rechteckigen Querschnitt aufweisen und mittels abgewinkelter, in Längsrichtung verlaufender erster Flansche, die von Seitenwänden des Außengehäuses ausgehen, am Rahmenteil oder an der Einstiegskonsole befestigt sein. Folglich besteht das Außengehäuse aus zwei parallel zueinander verlaufenden Seitenwänden, die einstückig mit einer zu dieser im rechten Winkel verlaufenden Vorderwand ausgebildet sind. Als Rückwand des Außengehäuses dient ein Abschnitt des Rahmenteils der Fahrerkabine oder ein entsprechender Abschnitt eines mit dem Rahmenteil verbundenen Elements. Somit lässt sich das Außengehäuse mit geringem Fertigungsaufwand als Blechteil herstellen. Die Seitenwände des Außengehäuses können dabei über jeweils stumpfwinklig nach außen verlaufende Wandabschnitte mit den ersten Flanschen verbunden sein. Dadurch können zwischen dem Außengehäuse und dem Abscheideelement zwei Führungskanäle gebildet werden.

In Weiterbildung dieser Anordnung soll das Abscheideelement als Formteil mit zwei sich parallel und mit Abstand zueinander erstreckenden Seitenwänden ausgebildet sein. Diese Seitenwände sind dabei zur Schaffung zweier Führungskanäle über erste stumpfwinklig verlaufende Wandabschnitte mit einem vorderen Wandteil verbunden. Diese zweiten Flansche können gemeinsam mit den ersten Flanschen mit der Anschlusskonstruktion verbunden werden, wobei sich die Flansche des Außengehäuses und des Abscheideelements überdecken. Sowohl die Seitenwände des Abscheideelements als auch das vordere Wandteil liegen dabei flächig an der Innenmantelfläche des Außengehäuses an, so dass damit im Wesentlichen eine seitliche Abdichtung der Führungskanäle realisiert wird.

Weiterhin ist vorgesehen, dass im Kopfstück des Außengehäuses ein Gebläse angeordnet ist, welches einerseits mit dem vom Feinfilter umschlossenen Innenraum und andererseits über ein Luftverteilsystem und/oder eine Klimaanlage mit dem Kabineninneren verbunden ist. Üblicherweise wird dabei dem Luftverteilsystem oder der Klimaanlage im Kabineninneren ein weiteres Gebläse, dessen Drehzahl veränderbar sein kann, zugeordnet sein.

In weiterer Ausgestaltung der erfindungsgemäßen Lösung des Patentanspruchs 1 ist vorgesehen, dass das Außengehäuse einen im Wesentlichen rechteckigen Querschnitt aufweist, dass das Abscheideelement Seitenwände aufweist, die flächig und dichtend an Innenmantelflächen des Außengehäuses anliegen und jeweils über stumpfwinklig verlaufende Wandabschnitte miteinander verbunden sind, und dass die Führungskanäle jeweils durch die stumpfwinklig verlaufenden Wandabschnitte des Abscheideelements und das Außengehäuse begrenzt werden. In diesem Fall sind sowohl das Außengehäuse als auch das Abscheideelement als geschlossenes Profil ausgebildet. Darüber hinaus bestehen natürlich auch Möglichkeiten, entweder in den entsprechenden Wänden des Abscheideelements als auch in den Wänden des Außengehäuses durch einen spanlosen Formgebungsprozess Sicken einzuformen, die zur Schaffung entsprechender Führungskanäle dienen.

Außerdem ist vorgesehen, dass das Verschlusselement als schwenkbare Klappe ausgebildet ist. Diese schwenkbare Klappe, die sich wahlweise in einer Öffnungs- oder Schließstellung befindet, dient als einfaches Mittel, um die im Reservoir angesammelte Staubmenge in vertikaler Richtung zu entsorgen. Dabei kann die Klappe durch einen elektrischen Stellmotor in ihre entsprechenden Stellungen bewegt werden, was vorzugsweise in bestimmten Zeitintervallen und in Abhängigkeit vom Betriebszustand der Arbeitsmaschine geschehen sollte. Vorzugsweise wird die Klappe während eines Stillstands der Einrichtung zur Förderung der Frischluft in ihre Öffnungsstellung betätigt, während vor einer Inbetriebnahme der Einrichtung, also der Förderung eines Frischluftstromes durch den Luftfilter, die Klappe wieder in ihre Schließstellung betätigt wird.

Weiterhin ist vorgesehen, dass das Reservoir pyramidenstumpfförmig ausgebildet ist und folglich etwa die Form eines Trichters aufweist, an dessen unterem Ende die durch die Klappe verschließbare Entleeröffnung vorgesehen ist. Dabei können sich die Wände des Abscheideelements bis in den Trichter hinein erstrecken, so dass dieser in eine erste außenliegende Kammer zur Sammlung großer Schmutzteile und eine zweite innenliegende Kammer zur Sammlung staubiger Bestandteile unterteilt ist.

Zur Schaffung eines mit einem relativ geringen Querschnitt ausgebildeten Luftfilters ist weiterhin vorgesehen, dass das Feinfilterelement schlauchförmig ausgebildet ist und dichtend mit einem Ansaugstutzen eines in einer oberen Wand des Außengehäuses angeordneten Gebläses verbunden ist. Aufgrund der entsprechenden Länge des schlauchförmig ausgebildeten Feinfilterelements wird eine ausreichende Filterfläche geschaffen. Da im Inneren des Feinfilterelements ein Unterdruck durch das Gebläse geschaffen wird, soll dieses radial nach innen durch einen Stützkorb oder eine Stützspirale abgestützt sein.

Schließlich ist vorgesehen, dass das schlauchförmig ausgebildete Feinfilterelement an einer ersten Stirnseite mit dem Gebläse verbunden ist und an einer von dieser abgewandten zweiten Stirnseite mittels eines scheibenförmigen Filterabschnitts verschlossen ist. Alternativ dazu besteht auch die Möglichkeit, diese zweite Stirnseite mittels eines luftundurchlässigen Verschlusselements zu verschließen.

Die Erfindung ist nicht auf die angegebene Kombination der Merkmale des unabhängigen Patentanspruchs 1 und der von diesem Patentanspruch abhängigen Patentansprüche beschränkt. Es ergeben sich darüber hinaus Möglichkeiten, einzelne Merkmale, soweit sie aus den Patentansprüchen, hervorgehen, miteinander zu kombinieren. Die Bezugnahme der Patentansprüche auf die Zeichnung durch entsprechende Verwendung von Bezugszeichen soll den Schutzumfang der Patentansprüche nicht beschränken.

Zur weiteren Erläuterung der Erfindung wird auf die Zeichnung verwiesen, in der ein Ausführungsbeispiel vereinfacht dargestellt ist. Es zeigen:
- Figur 1: eine schematische Darstellung einer Seitenansicht einer Fahrerkabine mit einem im Bereich eines hinteren Rahmenteils angeordneten Luftfilter,
- Figur 2: ein Längsschnitt eines schematisch dargestellten Luftfilters,
- Figur 3: eine perspektivische Darstellung eines erfindungsgemäßen Luftfilters,
- Figur 4: einen Schnitt gemäß Linie IV-IV durch den Luftfilter gemäß Figur 3 und
- Figur 5: eine perspektivische Teilansicht eines oberen Bereichs des erfindungsgemäßen Luftfilters.

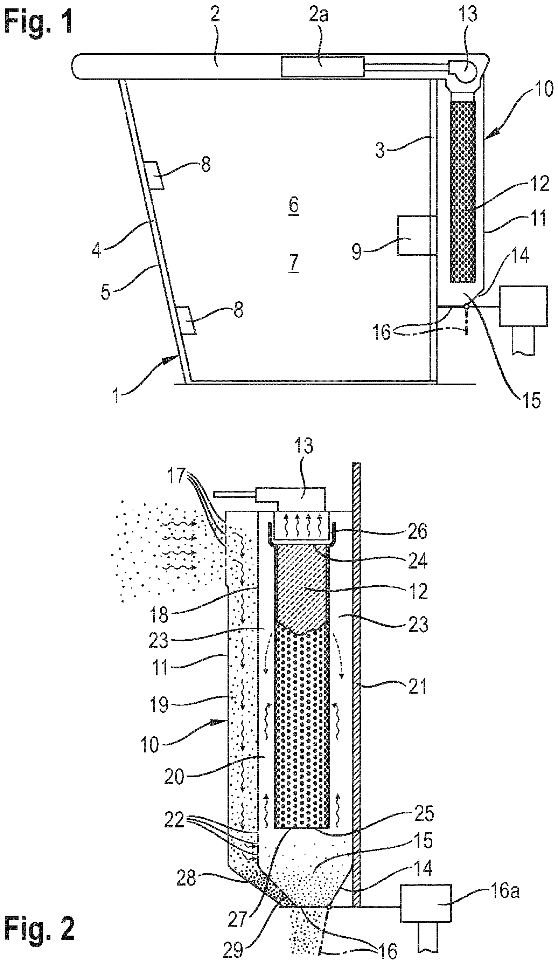

In der Figur 1 ist mit 1 eine Fahrerkabine bezeichnet, die ein auf Rahmenteilen 3 und 4 angeordnetes Kabinendach 2 aufweist. Das Kabinendach 2 nimmt eine Klimaanlage 2a mit einem Luftverteilsystem auf, wobei diese Bauelemente Bestandteile einer Einrichtung zur Förderung von Frischluft in ein Kabineninneres der Fahrerkabine 1 sind. Nicht sichtbar in dieser Darstellung sind zwei weitere das Kabinendach tragende Rahmenteile. Die Fahrerkabine 1 weist eine vom Rahmenteil 4 ausgehende Frontscheibe 5 sowie eine Seitenscheiben 6 auf. Zwischen den nicht dargestellten Rahmenteilen ist ebenfalls eine in der Darstellung nicht sichtbare Seitenscheibe vorgesehen. Außerdem kann die Fahrerkabine 1 auch heckseitig verglast sein, wenn es sich um eine vollverglaste Fahrerkabine 1 handelt. Da sich bei selbstfahrenden Mähdreschern ein Korntank hinter der Fahrerkabine 1 befindet, kann in diesem Fall anstelle einer heckseitigen Glasscheibe ein entsprechendes undurchsichtiges Verkleidungsteil vorgesehen sein. Die vorgenannte Seitenscheibe 6 ist als rahmenlose Einstiegstür 7 ausgebildet und über Scharniere 8 schwenkbar am Rahmenteil 4 geführt. Diese Einstiegstür 7 schlägt andererseits an das Rahmenteil 3 an und ist über ein Schließelement 9 an diesem verriegelbar.

Wie weiterhin aus der Figur 1 hervorgeht, ist am Rahmenteil 3 ein Luftfilter 10 angeordnet, der sich entlang des Rahmenteils 3 erstreckt. Dieser Luftfilter 10 ist zur Verdeutlichung seiner grundsätzlichen Funktion schematisch dargestellt, wobei dem Längsschnitt entnehmbar ist, dass der Luftfilter 10 aus einem Außengehäuse 11 mit einem darin angeordneten Feinfilterelement 12 besteht. Außerdem weist der Luftfilter 10 an seinem oberen Ende als integralen Bestandteil ein Gebläse 13 auf, das Frischluft durch den Luftfilter 10 saugt. Am unteren Ende des Außengehäuses 11 ist ein pyramidenstumpfförmiger Abschnitt 14 am Außengehäuse 11 ausgebildet, der in seinem Inneren ein Reservoir 15 zum Sammeln von aus der Frischluft abgeschiedenen Schmutzpartikeln vorgesehen. Dieses Reservoir 15 kann dabei über eine schwenkbare Klappe 16 entleert werden.

In der Figur 2 ist der gemäß Figur 1 verwendete Luftfilter 10 ebenfalls schematisch in einem Längsschnitt dargestellt, wobei dieser Darstellung weitere erfindungsgemäße Merkmale zu entnehmen sind. Dabei ist zu erkennen, dass das Außengehäuse 11 in seinem oberen Bereich, also einem oberen Ende benachbart mehrere horizontal verlaufende Lufteintrittsöffnungen 17 aufweist. Ferner ist im Inneren des Außengehäuses 11 ein Abscheideelement 18 angeordnet, das gegenüber dem Außengehäuse 11 einen Führungskanal 19 bildet. Eine Wand des Abscheideelements 18 ist dabei derart im Außengehäuse 11 angeordnet, dass sie das Feinfilterelement 12 zumindest teilweise mit einem radialen Abstand 20 umschließt. Sowohl das Außengehäuse 11 als auch das Abscheideelement 18 können dabei als Profile ausgebildet sein, die an einer Längsseite offen sind. Dieser offene Bereich dieser beiden Teile wird durch einen Wandabschnitt 21 des Rahmenteils 3 oder eines mit dem Rahmenteil 3 verbundenen weiteren Teils verschlossen.

Weiterhin ist die Wand des Abscheideelements 18 im Bereich eines unteren Endes des Luftfilters 10 mit horizontal verlaufenden Durchlässen 22 versehen. Die das Feinfilterelement 12 teilweise umschließende Wand des Abscheideelements 18 ist derart ausgebildet, dass sie bei der in der Figur 1 vorgesehenen Anordnung des Luftfilters 10 mit ihren beiden Enden an dem entsprechenden Rahmenteil 3 anliegt. Die mit großen Partikeln und Staubpartikeln durchsetzte Frischluft wird über die Lufteintrittsöffnungen 17 angesaugt und strömt vom oberen Ende des Luftfilters 10 her durch den Führungskanal 19 bis zu den Durchlässen 22, über die eine Umlenkung des Luftstroms erfolgt, wodurch große Partikel aus der Frischluft abgeschieden und dem Reservoir 15 zugeführt werden. Die von den großen Schmutzpartikeln, wie zum Beispiel Kurzstroh, Spreu, Blattbestandteile usw. befreite Frischluft strömt anschließend durch einen radialen Zwischenraum 23 zwischen dem Feinfilterelement 12 und dem Abscheideelement 18 sowie dem Wandabschnitt 21 und gelangt in das Innere des Feinfilterelements 12, wobei das Feinfilterelement 12 feine Staubbestandteile aus der Frischluft herausfiltert.

Das Feinfilterelement 12 ist schlauchförmig ausgebildet und an einer ersten Stirnseite 24 mittels einer dichtenden Steckverbindung 26 mit dem Gebläse 13 verbunden. Eine zweite Stirnseite 25 des schlauchförmigen Feinfilterelements 12 ist durch einen scheibenförmigen Filterabschnitt 27 verschlossen, so dass das Feinfilterelement 12 die Luft sowohl radial als auch stirnseitig ansaugen kann. Wie weiterhin aus der Figur 2 hervorgeht, ist das Reservoir 15, das sich im pyramidenstumpfförmigen Abschnitt 14 des Außengehäuses 11 befindet, durch zwei Kammern 28 und 29 gebildet. Die erste Kammer 28 nimmt dabei die über das Abscheideelement 18 abgeschiedenen großen Partikel auf, während sich in der zweiten Kammer 29 im Wesentlichen staubförmige Partikel, also im Falle eines Mähdreschers organischer Staub, sammelt. Dieser Staub gelangt dadurch in die zweite Kammer 29, dass Vibrationen an dem Luftfilter 11 hervorgerufen werden, die während des Schließens der Einstiegstür 7 hervorgerufen werden. Die Einstiegstür 7 schlägt dabei nämlich an dem Rahmenteil 3 an, wodurch dieses in Schwingungen versetzt wird und diese auf den Luftfilter 10 übertragen werden. Die Klappe 16 ist mit einem Stellmotor 16a versehen, der sie wahlweise in eine Öffnungs- oder Schließstellung verstellt.

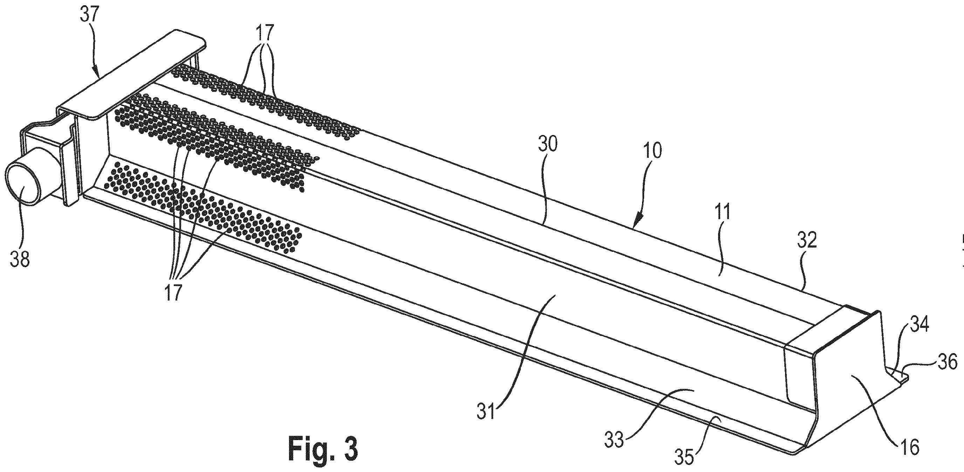

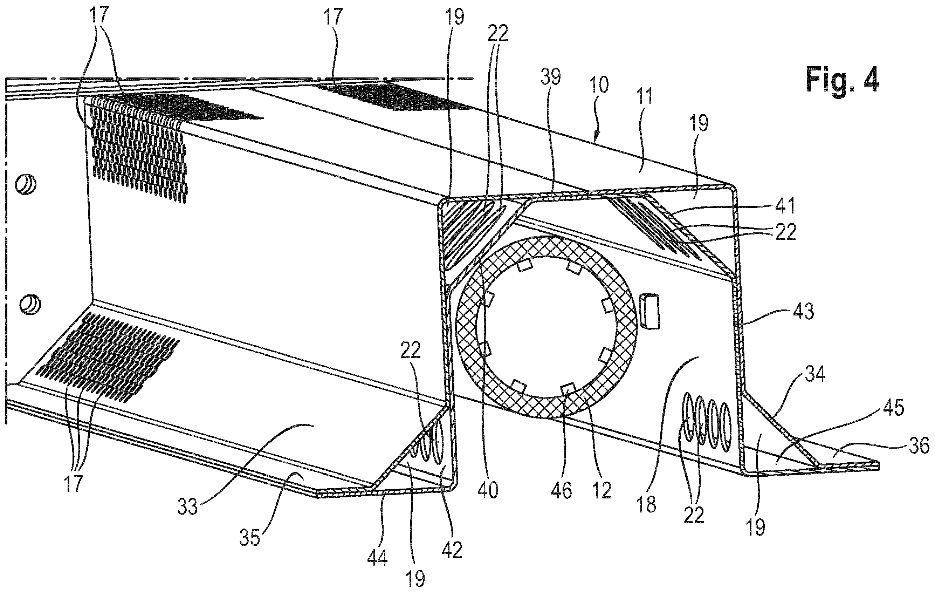

Aus der Figur 3 geht in Verbindung mit der Figur 4 ein erfindungsgemäß ausgebildeter Luftfilter 10 hervor, der jeweils perspektivisch dargestellt. Dabei ist erkennbar, dass das Außengehäuse 11 dieses Luftfilters 10 aufgrund seines im Wesentlichen rechteckigen Querschnitts eine prismenartige Außenkontur aufweist. Wie aus den beiden Figuren hervorgeht, weist das Außengehäuse 11 eine Stirnwand 30 und zwei im rechten Winkel von dieser ausgehende Seitenwände 31 und 32 auf. An die beiden Seitenwände 31 und 32 schließen sich wiederum stumpfwinklig verlaufende Wandabschnitte 33 und 34 an, die schließlich in erste Flansche 35 und 36 übergehen und deren Funktion im Zusammenhang mit der nachfolgenden Figur 4 noch näher erläutert wird. Mittels dieser beiden ersten Flansche 35 und 36 kann das Außengehäuse 11 an dem in Figur 1 dargestellten Rahmenteil 3 oder an einer Anschlusskonstruktion befestigt werden. Der in Figur 2 dargestellte Wandabschnitt 21 bildet dabei eine der Seitenwände des Außengehäuses 11.

Ferner ist, wie aus der Figur 3 hervorgeht, in einem oberen Kopfstück 37 des Außengehäuses 11 ein Auslassstutzen 38 angeordnet, der von dem in dieser Darstellung nicht sichtbaren Gebläse 13 ausgeht und über weitere Bauelemente die gereinigte Frischluft in das Innere der Fahrerkabine 1 leitet. Das Außengehäuse 11 weist in der Darstellung nach der Figur 3 an seinem vom Kopfstück 37 abgewandten Ende die bereits im Zusammenhang mit der Figur 2 beschriebene Klappe 16 auf.

Der Figur 4 sind dabei weitere Details der Anordnung zu entnehmen. Dabei ist dieser Schnittdarstellung entnehmbar, wie das Abscheideelement 18 innerhalb des Außengehäuses 11 angeordnet ist. Dieses Abscheideelement 18 weist ein vorderes Wandteil 39 auf, das über stumpfwinklig verlaufende Wandabschnitte 40 und 41 mit Seitenwänden 42 und 43 verbunden ist. Diese Seitenwände 42 und 43 gehen jeweils in zweite Flansche 44 und 45 über, die von den ersten Flanschen 35 und 36 des Außengehäuses 11 übergriffen werden, so dass jeweils beide Flansche 35 und 44 bzw. 36 und 45 gemeinsam an der beispielsweise als Rahmenteil 3 oder Kabinenrückwand ausgebildeten Anschlusskonstruktion befestigt werden können. Aufgrund des stumpfwinkligen Verlaufs der Wandabschnitte 33 und 34 des Außengehäuses 14 und des stumpfwinkligen Verlaufs der Wandabschnitte 40 und 41 des Abscheideelements 20 werden die zuvor erwähnten Führungskanäle 19 gebildet. Die Schnittdarstellung der Figur 4 zeigt im Übrigen, dass diese Führungskanäle 19 in die Durchlässe 22 einmünden, die an den jeweiligen Enden der Führungskanäle 19 vorgesehen sind. Innerhalb des Abscheideelements 18 ist mit radialem Abstand zu diesem das schlauchförmig ausgebildete Feinfilterelement 12 angeordnet. Dieses weist in seinem Inneren einen Stützkorb 46 auf.

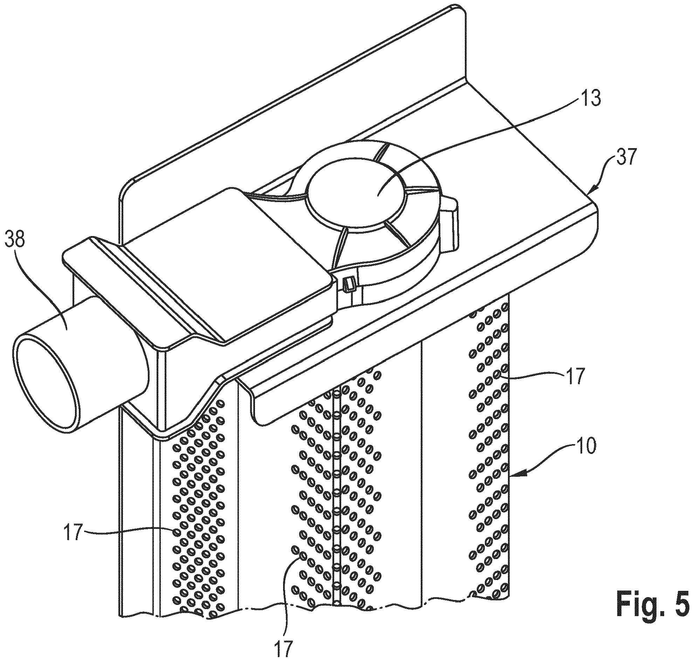

Die weitere Figur 5 zeigt schließlich eine Teilansicht des Luftfilters 10 im Bereich seines Kopfstücks 37. Dabei ist erkennbar, dass dieses Kopfstück 37 das Gebläse 13 aufnimmt und von diesem der Auslassstutzen 38 ausgeht. Ferner sind der Teilansicht auch die im Außengehäuse 11 vorgesehenen Lufteintrittsöffnungen 17 zu entnehmen.

### Bezugszeichenliste

- 1: Fahrerkabine
- 2: Kabinendach
- 2a: Klimaanlage
- 3: Rahmenteil
- 4: Rahmenteil
- 5: Frontscheibe
- 6: Seitenscheibe
- 7: Einstiegstür
- 8: Scharniere
- 9: Schließelement
- 10: Luftfilter
- 11: Außengehäuse
- 12: Feinfilterelement
- 13: Gebläse
- 14: pyramidenstumpfförmige Abschnitte
- 15: Reservoir
- 16: Klappe
- 16a: Stellmotor
- 17: Lufteintrittsöffnung
- 18: Abscheideelement
- 19: Führungskanal
- 20: radialer Abstand
- 21: Wandabschnitt von 3
- 22: Durchlässe
- 23: radialer Zwischenraum
- 24: erste Stirnseite von 12
- 25: zweite Stirnseite von 12
- 26: Steckverbindung
- 26a: Ansaugstutzen von 13
- 27: scheibenförmiger Filterabschnitt
- 28: erste Kammer von 15
- 29: zweite Kammer von 15
- 30: Stirnwand von 11
- 31: Seitenwand von 11
- 32: Seitenwand von 11
- 33: stumpfwinkelartig verlaufender Wandabschnitt von 11
- 34: stumpfwinkelförmig verlaufender Wandabschnitt von 11
- 35: erster Flansch von 11
- 36: erster Flansch von 11
- 37: Kopfstück
- 38: Auslassstutzen
- 39: vorderes Wandteil von 18
- 40: stumpfwinklig verlaufender Wandabschnitt von 18
- 41: stumpfwinklig verlaufender Wandabschnitt von 18
- 42: Seitenwand von 18
- 43: Seitenwand von 18
- 44: zweiter Flansch von 18
- 45: zweiter Flansch von 18
- 46: Stützkorb von 12

## Patentansprüche

1. Fahrerkabine (1) einer land- oder bauwirtschaftlich nutzbaren Arbeitsmaschine mit mehreren, ein Kabinendach (2) tragenden, im Wesentlichen vertikal verlaufenden Rahmenteilen (3, 4) und mit einer Einrichtung zur Förderung von Frischluft in ein Kabineninneres der Fahrerkabine (1), wobei der Einrichtung in Strömungsrichtung der Frischluft zumindest ein Luftfilter (10) zur Entfernung von groben und feinen Schmutzpartikeln aus der Frischluft vorgeschaltet ist, wobei der Luftfilter (10) als ein Schlauchfilter ausgeführt ist, zumindest ein Feinfilterelement (12) aufweist, und an seinem oberen Ende außerdem ein Gebläse (13) aufweist, das ein integraler Bestandteil des Luftfilters (10) ist, und das Frischluft durch den Luftfilter (10) saugt, **dadurch gekennzeichnet, dass** der Luftfilter (10) aus einem Außengehäuse (11) mit zumindest einem darin angeordneten Feinfilterelement (12) besteht, zumindest benachbart zu der Fahrerkabine (1) angeordnet ist und sich im Wesentlichen parallel zu einem der Rahmenteilen (3, 4) erstreckt, und dass im Inneren des Außengehäuses (11) ein Abscheideelement (18) angeordnet ist, das gegenüber dem Außengehäuse (11) einen Führungskanal (19) bildet, wobei eine Wand des Abscheideelements (18) im Außengehäuse (11) so angeordnet ist, dass sie das Feinfilterelement (12) zumindest teilweise mit einem radialen Abstand (20) umschließt.

2. Fahrerkabine (1) nach Anspruch 1, **dadurch gekennzeichnet, dass** das Außengehäuse (11) des Luftfilters (10) eine zylindrisch ausgebildete Außenkontur aufweist, dessen Längserstreckung in seiner Einbaulage im Wesentlichen vertikal verläuft, dass horizontal verlaufende Lufteintrittsöffnungen (17) im Außenmantel des Außengehäuses (11), einem oberen Ende benachbart, vorgesehen sind, dass von einem das Außengehäuse (11) an seinem oberen Ende verschließenden Kopfstück (37) das prismenartig oder zylindrisch ausgebildete Abscheideelement (18) ausgeht, welches gemeinsam mit dem Außengehäuse (11) den einen oder mehrere von den Lufteintrittsöffnungen (17) ausgehende vertikal verlaufende Führungskanäle (19) begrenzt, dass im Bereich eines unteren Endes des Abscheideelements (18) horizontal verlaufende Durchlässe (22) zur Umlenkung der Frischluft in das Innere des Abscheideelements (18) vorgesehen sind, dass innerhalb des Abscheidelements (18) mit radialem Abstand zu diesem das radial durchströmte Feinfilterelement (12) angeordnet ist, dass das Außengehäuse (11) an seinem unteren, unterhalb der Durchlässe (22) des Abscheideelements (18) liegenden Ende ein entleerbares Reservoir (15) zum Sammeln von groben Schmutzpartikeln und Staub aufweist und dass das Reservoir (15) an seinem Boden ein Verschlusselement (16) aufweist, welches zur Entleerung des Reservoirs (15) zu öffnen ist.

3. Fahrerkabine (1) nach Anspruch 1, **dadurch gekennzeichnet, dass** der Luftfilter (10) an einem der Rahmenteile (3, 4) oder an einem mit dem Rahmenteil verbundenen Element der Fahrerkabine (1) fixiert ist und das Außengehäuse (11) mit insgesamt prismenartig ausgebildeter Außenkontur aufweist, dessen Längserstreckung in seiner Einbaulage im Wesentlichen vertikal verläuft und an einer seiner äußeren, sich längs erstreckenden Seitenabschnitte durch das Rahmenteil (3) oder das mit diesem verbundene Element gebildet wird, dass horizontal verlaufende Lufteintrittsöffnungen (17) im Außenmantel des Außengehäuses (11), einem oberen Ende benachbart, vorgesehen sind, dass von einem das Außengehäuse (11) an seinem oberen Ende verschließenden Kopfstück (37) das Abscheideelement (18) ausgeht, welches gemeinsam mit dem Außengehäuse (11) den einen oder mehrere von den Lufteintrittsöffnungen (17) ausgehende vertikal verlaufende Führungskanäle (19) begrenzt und ebenfalls am Rahmenteil (3) oder dem Element fixiert ist, dass im Bereich eines unteren Endes des Abscheideelements (18) horizontal verlaufende Durchlässe (22) zur Umlenkung der Frischluft in das Innere des Abscheideelements (18) vorgesehen sind, dass innerhalb des Abscheidelements (18) mit radialem Abstand zu diesem das radial durchströmte Feinfilterelement (12) angeordnet ist, dass das Außengehäuse (11) an seinem unteren, unterhalb der Durchlässe (22) des Abscheideelements (18) liegenden Ende ein entleerbares Reservoir (15) zum Sammeln von groben Schmutzpartikeln und Staub aufweist und dass das Reservoir (15) an seinem Boden ein Verschlusselement (16) aufweist, welches zur Entleerung des Reservoirs (15) zu öffnen ist.

4. Fahrerkabine nach einem der Patentansprüche 1 bis 3, **dadurch gekennzeichnet, dass** eine Einstiegstür (7) der Fahrerkabine (1) im geschlossenen Zustand an einem vertikalen Rahmenteil (3) angeschlagen ist, welches den Luftfilter (10) unmittelbar oder mittelbar aufnimmt.

5. Fahrerkabine nach Patentanspruch 3, **dadurch gekennzeichnet, dass** das Außengehäuse (11) einen rechteeckigen Querschnitt aufweist und mittels abgewinkelter, in Längsrichtung verlaufender erster Flansche (35 und 36), die von Seitenwänden (31 und 32) des Außengehäuses (11) ausgehen, am Rahmenteil (3) oder an dem Element befestigt ist.

6. Fahrerkabine nach Patentanspruch 5, **dadurch gekennzeichnet, dass** die Seitenwände (31 und 32) des Außengehäuses (11) jeweils über stumpfwinklig nach außen verlaufende Wandabschnitte (33, 34) mit den ersten Flanschen (35, 36) verbunden sind.

7. Fahrerkabine nach Patentanspruch 5, **dadurch gekennzeichnet, dass** das Abscheideelement (18) als Formteil mit zwei sich parallel und mit Abstand zueinander erstreckenden Seitenwänden (42 und 43), die mit rechtwinklig zu den Seitenwänden verlaufenden zweiten Flanschen (44, 45) verbunden sind, ausgebildet ist, wobei die zweiten Flansche (44 und 45) gemeinsam mit den ersten Flanschen (35 und 36) am Rahmenteil (3) oder an dem Element befestigt sind, wobei das Abscheideelement (18) aus einem vorderen Wandteil (39), das im Wesentlichen dichtend am Außengehäuse (11)anliegt, und aus die Seitenwände (42 und 43) mit dem vorderen Wandteil (39) verbindenden zweiten Wandabschnitten (40 und 41) besteht, die sowohl zu den Seitenwänden (42 und 43) als auch zu dem vorderen Wandteil (39) unter einem stumpfen Winkel verlaufen, und dass die Führungskanäle (19) jeweils durch die stumpfwinklig verlaufenden Wandabschnitte (40 und 41) des Abscheideelements (18) und das Außengehäuse (11) begrenzt werden.

8. Fahrerkabine nach einem der Patentansprüche 2 bis 3, **dadurch gekennzeichnet, dass** im Kopfstück (37) das Gebläse (13) angeordnet ist, welches einerseits mit dem vom Feinfilterelement (12) umschlossenen Innenraum und andererseits über Luftverteilsystem und/oder eine Klimaanlage mit dem Kabineninneren verbunden ist.

9. Fahrerkabine nach einem der Patentansprüche 1 oder 2, **dadurch gekennzeichnet, dass** das Außengehäuse (11) einen rechteeckigen Querschnitt aufweist, dass das Abscheideelement (18) Seitenwände (42, 43) aufweist, die flächig und dichtend an Innenmantelflächen des Außengehäuses (11) anliegen und jeweils über stumpfwinklig verlaufende Wandabschnitte (40, 41) miteinander verbunden sind, und dass die Führungskanäle (19) jeweils durch die stumpfwinklig verlaufenden Wandabschnitte (40, 41) des Abscheideelements (18) und das Außengehäuse (11) begrenzt werden.

10. Fahrerkabine nach einem der Patentansprüche 2 bis 3, **dadurch gekennzeichnet, dass** das Verschlusselement als schwenkbare Klappe (16) ausgebildet ist.

11. Fahrerkabine nach Patentanspruch 10, **dadurch gekennzeichnet, dass** die Klappe (16) durch einen Stellmotor (16a) in ihre Öffnungs- oder Schließstellung verschwenkbar ist.

12. Fahrerkabine nach Patentanspruch 11, **dadurch gekennzeichnet, dass** der Stellmotor (16a) derart gesteuert ist, dass die Klappe (16) in bestimmten Zeitintervallen während eines Stillstands der Einrichtung zur Förderung der Frischluft in ihre Öffnungssstellung und vor Inbetriebnahme der Einrichtung wieder in ihre Schließstellung betätigt wird.

13. Fahrerkabine nach einem der Patentansprüche 1 bis 3, **dadurch gekennzeichnet, dass** das Feinfilterelement (12) schlauchförmig ausgebildet ist und über eine Steckverbindung (26) dichtend mit einem Ansaugstutzen (26a) eines in einer oberen Stirnwand des Außengehäuses (11) angeordneten Gebläses (13) verbunden ist.

14. Fahrerkabine nach Patentanspruch 13, **dadurch gekennzeichnet, dass** das schlauchförmig ausgebildete Feinfilterelement (12) radial innen einen Stützkorb (46) oder eine Stützspirale aufweist.

15. Fahrerkabine nach einem der Patentansprüche 13 bis 14, **dadurch gekennzeichnet, dass** das schlauchförmig ausgebildete Feinfilterelement (12) an einer ersten Stirnseite (24) mit dem Gebläse (13) verbunden ist und an einer von dieser abgewandten zweiten Stirnseite (25) mittels eines scheibenförmigen Filterabschnitts (27) verschlossen ist.

## Claims

1. Driver's cab (1) of a work machine usable in agriculture or construction with several frame parts (3, 4) running substantially vertical, supporting a cab roof (2), and with a device for delivering fresh air into a cab interior of the driver's cab (1), wherein at least one air filter (10) for the removal of coarse and fine dirt particles from the fresh air is connected upstream of the device in the flow direction of the fresh air, wherein the air filter (10) is designed as a bag filter, has at least one fine filter element (12) and, at its upper end, additionally has a fan (13) which is an integral component of the air filter (10), and sucks the fresh air through the air filter (10), **characterized in that** the air filter (10) consists of an outer housing (11) with at least one fine filter element (12) arranged therein, is arranged at least adjacent to the driver's cab (1) and extends substantially parallel to one of the frame parts (3, 4), and **in that** inside the outer housing (11) a separating element (18) is arranged which forms a guide channel (19) vis-à-vis the outer housing (11), wherein one wall of the separating element (18) is arranged in the outer housing (11) such that it at least partially encloses the fine filter element (12) at a radial distance (20).

2. Driver's cab (1) according to claim 1, **characterized in that** the outer housing (11) of the air filter (10) has a cylindrically shaped outer contour, the longitudinal extent of which runs substantially vertical in its installation position, **in that** horizontally-running air inlet openings (17) are provided in the outer casing of the outer housing (11), adjacent to an upper end, **in that** there extends from a head piece (37) closing the outer housing (11) at its upper end the prism-like or cylindrically-shaped separating element (18) which, together with the outer housing (11), borders the one or more vertically-running guide channels (19) extending from the air inlet openings (17), **in that**, in the area of a lower end of the separating element (18), horizontally-running apertures (22) are provided for deflecting the fresh air into the inside of the separating element (18), **in that** the fine filter element (12) with radial throughflow is arranged inside the separating element (18), at a radial distance therefrom, **in that** the outer housing (11) has, at its lower end lying below the apertures (22) of the separating element (18), an emptiable reservoir (15) for collecting coarse dirt particles and dust, and **in that** the reservoir (15) has on its base a closing element (16) which is to be opened for emptying the reservoir (15).

3. Driver's cab (1) according to claim 1, **characterized in that** the air filter (10) is fixed to one of the frame parts (3, 4) or to an element of the driver's cab (1) connected to the frame part and has the outer housing (11) with an outer contour formed prism-like overall, the longitudinal extent of which, in its installation position, runs substantially vertical, and, at one of its outer, longitudinally-extending side sections, is formed by the frame part (3) or the element connected therewith, **in that** horizontally-running air inlet openings (17) are provided in the outer casing of the outer housing (11) adjacent to an upper end, **in that** there extends from a head piece (37) closing the outer housing (11) at its upper end the separating element (18) which, together with the outer housing (11), borders the one or more vertically-running guide channels (19), extending from the air inlet openings (17) and is also fixed to the frame part (3) or the element, **in that** horizontally-running apertures (22) are provided in the area of a lower end of the separating element (18) for deflecting the fresh air into the inside of the separating element (18), **in that** the fine filter element (12) with radial throughflow is arranged inside the separating element (18) at a radial distance therefrom, **in that** the outer housing (11) has, at its lower end lying below the apertures (22) of the separating element (18), an emptiable reservoir (15) for collecting coarse dirt particles and dust, and **in that** the reservoir (15) has on its base a closing element (16) which is to be opened for emptying the reservoir (15).

4. Driver's cab according to one of claims 1 to 3, **characterized in that** an entry door (7) of the driver's cab (1) in the closed state is attached to a vertical frame part (3) which directly or indirectly accommodates the air filter (10).

5. Driver's cab according to claim 3, **characterized in that** the outer housing (11) has a rectangular cross-section and is secured to the frame part (3) or to the element by means of angled first flanges (35 and 36) running in longitudinal direction which extend from side walls (31 and 32) of the outer housing (11).

6. Driver's cab according to claim 5, **characterized in that** the side walls (31 and 32) of the outer housing (11) are each connected to the first flanges (35, 36) via wall sections (33, 34) running outwards at an obtuse angle.

7. Driver's cab according to claim 5, **characterized in that** the separating element (18) is formed as a moulding with two side walls (42 and 43) extending parallel and at a distance from each other, which are connected to second flanges (44, 45) running at right angles to the side walls, wherein the second flanges (44 and 45), together with the first flanges (35 and 36), are secured to the frame part (3) or to the element, wherein the separating element (18) consists of a front wall part (39), which lies substantially sealingly against the outer housing (11), and of second wall sections (40 and 41) connecting the side walls (42 and 43) to the front wall part (39), which second wall sections (40 and 41) run at an obtuse angle both to the side walls (42 and 43) and to the front wall part (39), and **in that** the guide channels (19) are each bordered by the wall sections (40 and 41), running at an obtuse angle, of the separating element (18) and the outer housing (11).

8. Driver's cab according to one of claims 2 to 3, **characterized in that** there is arranged in the head piece (37) the fan (13), which is connected on the one hand to the inner space enclosed by the fine filter element (12) and on the other hand to the cab interior via an air distribution system and/or an air conditioning system.

9. Driver's cab according to one of claims 1 or 2, **characterized in that** the outer housing (11) has a rectangular cross-section, **in that** the separating element (18) has side walls (42, 43) which lie flat and sealingly against inner casing surfaces of the outer housing (11) and are in each case connected to each other via wall sections (40, 41) running at an obtuse angle, and **in that** the guide channels (19) are in each case bordered by the wall sections (40, 41), running at an obtuse angle, of the separating element (18) and the outer housing (11).

10. Driver's cab according to one of claims 2 to 3, **characterized in that** the closing element is formed as a pivotable flap (16).

11. Driver's cab according to claim 10, **characterized in that** the flap (16) can be pivoted into its open or closed position by a servomotor (16a).

12. Driver's cab according to claim 11, **characterized in that** the servomotor (16a) is controlled such that, at specific time intervals during a stoppage of the device that delivers the fresh air, the flap (16) is actuated into its open position and, before start-up of the device, back into its closed position.

13. Driver's cab according to one of claims 1 to 3, **characterized in that** the fine filter element (12) is formed tubular and is sealingly connected to an intake pipe (26a) of a fan (13) arranged in an upper front wall of the outer housing (11) via a plug-in connection (26).

14. Driver's cab according to claim 13, **characterized in that** the tubular-formed fine filter element (12) has a supporting cage (46) or supporting coil radially inside.

15. Driver's cab according to one of claims 13 to 14, **characterized in that** the tubular fine filter element (12) is connected to the fan (13) at a first end face (24) and is closed at a second end face (25) facing away therefrom, by means of a disc-shaped filter section (27).

## Revendications

1. Cabine de conduite (1) d'une machine de travail utilisable en agriculture ou dans les travaux publics, comprenant plusieurs parties de bâti (3, 4) qui portent un toit de cabine (2) et s'étendent sensiblement verticalement, et comprenant un équipement pour amener de l'air frais dans un intérieur de cabine de la cabine de conduite (1), en amont de l'équipement étant disposé, dans le sens d'écoulement de l'air frais, au moins un filtre à air (10) pour éliminer de l'air frais des particules polluantes grossières et fines, le filtre à air (10) étant conformé en filtre à manche, comportant au moins un élément de filtre fin (12) et, en outre, comportant à son extrémité supérieure une soufflante (13) qui fait partie intégrante du filtre à air (10) et qui aspire de l'air frais à travers le filtre à air (10), **caractérisée en ce que** le filtre à air (10) est constitué d'un carter extérieur (11) comprenant au moins un élément de filtre fin (12) disposé à l'intérieur, disposé au moins au voisinage de la cabine de conduite (1) et s'étendant sensiblement parallèlement à l'une des parties de bâti (3, 4), et **en ce qu'**à l'intérieur du carter extérieur (11) est disposé un élément séparateur (18) qui forme par rapport au carter extérieur (11) un canal de guidage (19), une paroi de l'élément séparateur (18) étant disposée dans le carter extérieur (11) de façon à entourer au moins en partie l'élément de filtre fin (12) avec un écartement radial (20).

2. Cabine de conduite (1) selon la revendication 1, **caractérisée en ce que** le carter extérieur (11) du filtre à air (10) présente un contour extérieur de forme cylindrique dont l'extension longitudinale, dans sa position montée, s'étend sensiblement verticalement, **en ce que** des orifices d'entrée d'air s'étendant horizontalement (17) sont prévus dans l'enveloppe extérieure du carter extérieur (11) au voisinage d'une extrémité supérieure, **en ce que** d'une pièce de tête (37) fermant le carter extérieur (11) à son extrémité supérieure part l'élément séparateur de forme prismatique ou cylindrique (18), lequel délimite, conjointement avec le carter extérieur (11), l'un ou plusieurs des canaux de guidage (19) partant des orifices d'entrée d'air (17) et s'étendant verticalement, **en ce que** dans la zone d'une extrémité inférieure de l'élément séparateur (18) sont prévus des passages s'étendant horizontalement (22) pour dévier l'air frais vers l'intérieur de l'élément séparateur (18), **en ce qu'**à l'intérieur de l'élément séparateur (18) est disposé, à distance radiale de celui-ci, l'élément de filtre fin (12) parcouru radialement, **en ce qu'**à son extrémité inférieure située au-dessous des passages (22) de l'élément séparateur (18), le carter extérieur (11) comporte un réservoir à vider (15) pour collecter des particules polluantes grossières et de la poussière, et **en ce que** le réservoir (15) comporte au niveau de son fond un élément de fermeture (16) qui s'ouvre pour vider le réservoir (15) .

3. Cabine de conduite (1) selon la revendication 1, **caractérisée en ce que** le filtre à air (10) est fixé à une des parties de bâti (3, 4) ou à un élément de la cabine de conduite (1) relié à la partie de bâti, et le carter extérieur (11) présente un contour extérieur de forme générale prismatique, dont l'extension longitudinale dans sa position montée est sensiblement verticale, et est formé, sur une de ses portions latérales extérieures s'étendant longitudinalement, par la partie de bâti (3) ou par l'élément relié à celle-ci, **en ce que** des orifices d'entrée d'air s'étendant horizontalement (17) sont prévus dans l'enveloppe extérieure du carter extérieur (11) au voisinage d'une extrémité supérieure, **en ce que** d'une pièce de tête (37) fermant le carter extérieur (11) à son extrémité supérieure part l'élément séparateur (18), lequel délimite, conjointement avec le carter extérieur (11), l'un ou plusieurs des canaux de guidage (19) partant des orifices d'entrée d'air (17) et s'étendant verticalement et est également fixé à la partie de bâti (3) ou à l'élément, **en ce que** dans la zone d'une extrémité inférieure de l'élément séparateur sont prévus des passages s'étendant horizontalement (22) pour dévier l'air frais vers l'intérieur de l'élément séparateur (18), **en ce qu'**à l'intérieur de l'élément séparateur (18) est disposé, à distance radiale de celui-ci, l'élément de filtre fin (12) parcouru radialement, **en ce qu'**à son extrémité inférieure située au-dessous des passages (22) de l'élément séparateur (18), le carter extérieur (11) comporte un réservoir à vider (15) pour collecter des particules polluantes grossières et de la poussière, et **en ce que** le réservoir (15) comporte au niveau de son fond un élément de fermeture (16) qui s'ouvre pour vider le réservoir (15).

4. Cabine de conduite selon une des revendications 1 à 3, **caractérisée en ce qu'**à l'état fermé, une porte d'entrée (7) de la cabine de conduite (1) est montée sur une partie de bâti verticale (3) qui reçoit le filtre à air (10) directement ou indirectement.

5. Cabine de conduite selon la revendication 3, **caractérisée en ce que** le carter extérieur (11) présente une section transversale rectangulaire et est fixé à la partie de bâti (3) ou à l'élément au moyen de premières ailes coudées (35 et 36) qui s'étendent dans la direction longitudinale et qui partent de parois latérales (31 et 32) du carter extérieur (11).

6. Cabine de conduite selon la revendication 5, **caractérisée en ce que** les parois latérales (31 et 32) du carter extérieur (11) sont chacune reliées aux premières ailes (35, 36) par l'intermédiaire de portions de paroi (33, 34) qui s'étendent vers l'extérieur selon un angle obtus.

7. Cabine de conduite selon la revendication 5, **caractérisée en ce que** l'élément séparateur (18) est conformé en pièce de forme à deux parois latérales parallèles (42, 43) qui s'étendent à distance l'une de l'autre et qui sont reliées à des secondes ailes (44, 45) s'étendant à angle droit par rapport aux parois latérales, les secondes ailes (44 et 45) étant fixées conjointement avec les premières ailes (35 et 36) à la partie de bâti (3) ou à l'élément, l'élément séparateur (18) étant constitué d'une partie de paroi avant (39), qui est en contact sensiblement étanche avec le carter extérieur (11), et de secondes portions de paroi (40 et 41) qui relient les parois latérales (42 et 43) à la partie de paroi avant (39) et qui s'étendent selon un angle obtus aussi bien par rapport aux parois latérales (42 et 43) que par rapport à la partie de paroi avant (39), et **en ce que** les canaux de guidage (19) sont chacun délimités par les portions de paroi s'étendant à angle obtus (40 et 41) de l'élément séparateur (18) et par le carter extérieur (11).

8. Cabine de conduite selon une des revendications 2 à 3, **caractérisée en ce que** dans la pièce de tête (37) est disposée la soufflante (13), laquelle est reliée, d'une part, à l'espace intérieur entouré par l'élément de filtre fin (12) et, d'autre part, à l'intérieur de la cabine par l'intermédiaire d'un système de répartition d'air et/ou d'une climatisation.

9. Cabine de conduite selon une des revendications 1 ou 2, **caractérisée en ce que** le carter extérieur (11) présente une section transversale rectangulaire, **en ce que** l'élément séparateur (18) comporte des parois latérales (42, 43) qui sont en contact à plat et étanche avec des surfaces intérieures d'enveloppe du carter extérieur (11) et sont reliées entre elles par l'intermédiaire de portions de paroi (40, 41) s'étendant selon un angle obtus, et **en ce que** les canaux de guidage (19) sont chacun délimités par les portions de paroi s'étendant à angle obtus (40, 41) de l'élément séparateur (18) et par le carter extérieur (11).

10. Cabine de conduite selon une des revendications 2 à 3, **caractérisée en ce que** l'élément de fermeture est conformé en clapet pivotant (16).

11. Cabine de conduite selon la revendication 10, **caractérisée en ce que** le clapet (16) peut pivoter dans une position ouverte ou fermée par l'intermédiaire d'un servomoteur (16a).

12. Cabine de conduite selon la revendication 11, **caractérisée en ce que** le servomoteur (16a) est commandé de façon qu'à des intervalles de temps déterminés, pendant un arrêt de l'équipement d'amenée d'air frais, le clapet (16) soit amené dans sa position ouverte et, avant la mise en marche de l'équipement, soit ramené dans sa position fermée.

13. Cabine de conduite selon une des revendications 1 à 3, **caractérisée en ce que** l'élément de filtre fin (12) est conformé en manche et, par l'intermédiaire d'une liaison emboîtée (26), est relié de façon étanche à une tubulure d'aspiration (26a) d'une soufflante (13) disposée dans une paroi frontale supérieure du carter extérieur (11) .

14. Cabine de conduite selon la revendication 13, **caractérisée en ce que** l'élément de filtre fin conformé en manche (12) comporte, radialement à l'intérieur, un panier d'appui (46) ou une spirale d'appui.

15. Cabine de conduite selon une des revendications 13 à 14, **caractérisée en ce que** l'élément de filtre fin conformé en manche (12) est relié, au niveau d'un premier côté frontal (24), à la soufflante (13) et est fermé, au niveau d'un second côté frontal (25) situé à l'opposé de celui-ci, au moyen d'une portion de filtre en forme de disque (27).
